# EUROPEAN PATENT SPECIFICATION

(11) **EP 1 876 372 B1**
(45) Date of publication and mention of the grant of the patent: **20.08.2008**
(21) Application number: 06013971.4
(22) Date of filing: 05.07.2006
(51) Int. Cl.: F16D 65/12

(54) **Disc brake and spacer element**
Scheibenbremse und Abstandselement
Frein à disque et élément d'espacement

(43) Date of publication of application: 09.01.2008
(73) Proprietor: Haldex Brake Products AB, 261 24 Landskrona (SE)
(72) Inventor: Stensson, Göran, 27755 Brösarp (SE); Gripemark, Joakim, 22220 Lund (SE)
(74) Representative: Hruschka, Jürgen

(56) References cited:
- WO-A1-03/062661
- US-A- 2 737 033
- US-A- 3 754 624
- US-A- 4 256 209

## Description

### Technical Field

The present invention concerns disc brakes and spacer elements to be used in such disc brakes. Disc brakes normally either have a fixed caliper or a sliding caliper. The present invention is directed to disc brakes having a fixed or sliding caliper and one or more brake discs, of which at least one is sliding. The present invention concerns both disc brakes in which the brake pads only are to act on a restricted part of a full circle, and also disc brakes in which the brake pads act on almost a full circle along the brake discs. The former type of brakes is also referred to as spot-type disc brakes.

### Prior Art

Sliding brake discs are normally received on a sleeve, hub or the like by means of teeth, splines or the like, or by any other means giving a fixed connection in rotational direction but a sliding connection in axial direction. The hub, sleeve etc. is received on and connected to the wheel axle. Depending on type and make of the brake the brake disc may either be received on a sleeve on or otherwise connected to the hub, connected to the wheel axle, or the brake disc may be received directly on the hub, without the use of any sleeve. For convenience, the expression "hub" is normally used in this description, but it should be construed broadly also covering sleeves etc.. In order to allow for sliding there generally has to be a certain play between the teeth, splines or the like on the inner circumference of the brake disc and the teeth, splines or the like on the outer circumference of the hub or sleeve.

A brake having one or more sliding discs may encounter problems both in a released condition and in connection with application and releasing of the brake. In the released condition there may be noise problems, problems with skewing and/or the possibility of dragging. In connection with release and application of the brake there may be problems regarding a proper separation of brake pads and discs.

Due to the play needed between disc and hub to make relative sliding movement possible and to avoid locking up of the sliding function by dirt and corrosion, it is inherent that there may be generation of noise in a released condition since the clearance between the splines or the like generally allows large radial and rotational displacements of the brake disc relative to the hub or the like. Beside the risk of disc instability, rattling noise may be created in that the wheel axle and thus the hub rotate and the brake discs are received "loosely" on the hub, whereby the noise is formed by movements of the disc in relation to the hub. Noise may also be formed due to the travel on uneven ground causing jerks through the vehicle.

This problem is often solved in that springs or the like are placed between the hub and the brake disc to provide radial forces to the disc for the purpose of stabilization and also of prevention of noise and rattle.

If the discs skew, there is a risk that they lock in skewed positions in the released condition. Without proper separation of the brake discs and brake pads after braking there may be excessive wear of the brake pads and dragging may occur, i.e. the brake disc or discs remain in contact with the brake pads although being in a released condition.

Moreover, under some circumstances such spring elements have the drawback that they restrain the free axial movement of the brake disc to an extent that unwanted dragging occurs in the released position of the disc brake.

Beside noise generation other problems in disc brakes do consist in the heat generation. During braking, the discs are heated up immensely. The heat generated by the braking process is conducted to the hub and thereby also to the bearings arranged in the hub, whereby most of the heat is conducted to the bearings when the brake is in its released condition, which, of course, is the case during most of the time, when the brake is in use. The bearings itself as well as the lubricating means used by the bearings are highly sensitive to heat. Therefore, heat, which is present over a certain temperature level for a long time, will substantially shorten the lifetime of the bearings in the hub. Their replacement will significantly increase the service costs.

The heat conduction mainly takes place via the splined connection between the discs and the hub or the part connected to the hub. The larger the number of contact points between the splines or the teeth of the brake disc and the hub or the part connected to the hub on the one hand, or the smaller the air gap, i.e. clearance, between the surfaces of the splines or the teeth on the other hand, the more heat will be conducted to the bearings. In addition, if said clearance of the splined connection varies considerably due to improper translational or rotational centering of the brake disc in relation to the hub or the part connected to the hub, more heat is conducted to the bearings as well.

In other words, the magnitude of the air gap or clearance in the splined connection between the brake disc and the hub is crucial for the reduction of the heat conduction from the brake disc to the hub or the part connected to the hub.

Usual clearances are in the range of 0.2 - 1.0 mm.

The above problems, in particular dragging, are solved by disc stabilizing elements as they are known, for instance, from the publication WO 2006/002932 A1 of the applicant. The disc stabilizing elements disclosed therein provide a retracting function by means of the creation of forces which support the axial retraction of the brake disc at release of the brake. In order to ensure a reliable and sufficient retracting function, to compensate any manufacturing tolerances and to reduce the sensitivity of the assembly against dirt and corrosion, such disc stabilizing elements are designed in such a way that there still exists a clearance between the stiffer parts and portions of said elements and the hub and/or the disc.

However, such clearance still allows radial displacement of the brake disc relative to the hub or the part connected to the hub to such an extent which supports the generation of noise. Beside the possibility of vibrations of the brake disc relative to the hub, noise is mainly generated by impacts resulting from the brake disc repeatedly hitting the hub when driving on uneven roads, whereby the flanks of the splines of the brake disc do come into contact with the flanks of the splines of the hub or the part connected to the hub.

The corresponding parts of the disc stabilizing elements of the prior art either are not stiff enough to resist the inertia forces of the brake disc during driving on uneven roads or due to the special design, which mainly is focussed on the provision of the retracting function, no equivalent stiff parts or portions of the disc stabilizing elements are arranged between the splines of the disc and the splines of the hub so as to take the impacts instead of the flanks of said splines.

Also, other guiding or interconnecting elements between a brake disc and a hub as known from the prior art do not provide any suitable solutions to or do not even consider the problem of radial impacts. For instance, US-document US 3,754,624 discloses some kind of spacer elements which are arranged between rotors and stators and which have some resilience in order to enable substantially equal distribution of the torque during transmission at brake actuation. These elements are even not designed in a suitable way to take up radial impacts. From WO 2003/062661 A1 a connection between a brake disc and a hub is known which is realized in that projections are inserted into recesses of the brake disc on the one hand and correspondingly into recesses of the hub on the other hand. The torque transmission only takes place via these projections, which are also not able and not configured to take up any radial movements between these elements.

### Summary of the Invention

The present invention addresses the afore-mentioned problems, which occur in disc brakes.

In particular, the invention refers to a disc brake having a caliper encircling one or more brake discs, of which at least one brake disc is received slideably on a hub or a part connected to the hub by means of intermeshing splines of both the brake disc and the hub or the part connected to the hub, wherein spacer elements are placed between the brake disc and the hub or the part connected to the hub, which spacer elements are arranged and configured so that contact between the flanks of the splines of the brake disc and the flanks of the hub or the part connected to the hub is prevented for any radial movement of the brake disc relative to the hub or the part connected to the hub only.

According to the invention, the spacer elements are specifically designed so as to still allow flank contacts during the rotational engagement of the brake disc and the hub or the part connected to the hub for the purpose of torque transmission during braking, however, the spacer elements do not allow any flank contacts in all radial directions after and during release of the brake.

In other words, exclusively and solely for the release state of the brake, the spacer elements according to the invention prevent, limit or dampen radial movements of the brake disc relative to the hub always to the extent that the flanks of the splines of both the brake disc and the hub do never come into contact.

For that purpose at least a portion of the spacer element comprises at least such a stiffness, that radial impacts of the brake disc are dampened in order to avoid the undesired contacts between the flanks.

The stiffness of the spacer elements is selected so that resistance to the inertia forces of the brake disc is always ensured, but these portions are still more resilient than the stiffness of the splines of the disc and the hub themselves.

According to the invention, the spacer elements as such can exclusively provide the function of impact dampening or just portions of the spacer elements can serve for said function, whereas the spacer elements can still enable other functions, as will be described below.

The spacer elements are located circumferentially spaced on the brake disc or the hub in order to provide substantially the same function independent of the rotational position of the brake disc. Preferably three spacer elements are equidistantly spaced around the brake disc and each spacer element is configured so as to circumferentially provide equal clearances between the splines of the brake disc and the splines of the hub or the part connected to the hub thereby rotationally centering the brake disc relative to the hub or the part connected to the hub.

The clearance shall be at least substantially equal to the extent that the clearance between the flanks exceeds a predetermined value which is larger than the clearance between the spacer elements or the dampening portions of the spacer elements and the brake disc or the hub. Preferably, the spacer elements are configured and arranged so that the clearance on both sides of the splines, i.e. between the flanks of the splines of the brake disc and the flanks of the splines of the hub, is equal.

The clearance at the flanks of the splines is recommended to exceed the clearance between the spacer elements and the brake disc or the hub by 50%, preferably by 70% and most preferably by 100%.

According to the invention, the spacer elements or the dampening portions of the spacer elements are at least configured so that contact between them and the brake disc on the one side and between them and the hub on the other side is such that no forces are transmitted which might restrain the axial sliding of the brake disc. Most preferably, the spacer elements or the dampening portions of the spacer elements are designed so as to not simultaneous contact the brake disc and the hub or the part connected to the hub.

The clearance to avoid any simultaneous contact between the spacer elements and the brake disc or the hub or their dampening portions shall be minimum of 0.1 mm, preferably minimum of 0.2 mm and most preferably minimum of 0.3 mm.

This designed-in clearance between the dampening portions of the spacer elements or the spacer elements and the brake disc or the hub ensures reliable dampening and unstrained axial disc retraction even in the presence of the usual manufacturing tolerances in brake discs and hubs and of imperfect rotational centering of the brake disc on the hub.

In one embodiment the spacer element or at least part of the spacer element can be configured as a helical spring made of one single wire which is to be received in the gap between the splines of the brake disc and the hub and which preferably extends over the thickness of the brake disc. The helical springs or helical spring portions take the impacts from the brake disc perpendicular to their longitudinal axis.

According to another embodiment, the spacer element is configured as a cylindrical tube, preferably made of steel, which is resilient, e.g. by means of a longitudinal axial slit, and takes up the impact forces perpendicular to its longitudinal axis as well.

The spacer elements can be provided as separate elements which serve for the impact dampening. In a preferred embodiment according to the invention, such spacer elements in addition provide other functions, as e.g. disclosed in the previously mentioned publication WO 2006/002932 A1.

One specific function which might be incorporated in the design of the spacer element is the creation of forces upon sliding of the brake disc on the hub which assists the axial retraction of the brake disc at release of the brake. This can be achieved by specific features of the spacer elements as they have been, for instance, described in WO 2006/002932 A1 to which publication herewith it is explicitly referred to. At application of the brake force at least portions of the spacer elements will deflect elastically in an axial direction when the disc slides, which will provide an axial force on the disc striving to move it backwards again at release of the brake.

The spacer elements are moreover preferably designed so as to be able to axially slide with the brake disc according to the wear of the brake pads. To provide for pad wear compensation the spacer elements are configured so as to axially frictionally engage the hub or the part connected to the hub in such a way that the spacer elements deflect in axial direction but remain axially stationary on the hub or the part connected to the hub when axial forces insufficient to overcome the axial frictional engagement between the spacer elements and the hub or the part connected to the hub are applied, and that the spacer elements deflect in axial direction and also slide axially on the hub or the part connected to the hub when axial forces sufficient to overcome the frictional engagement between the spacer elements and the hub or the part connected to the hub are applied. Such wear compensation may either be single-sided or double-sided. The present invention functions with both these types of wear compensation.

Other functions include disc stabilization and the prevention of thermal conductivity between the brake disc and the hub or the part connected to the hub.

The invention not only refers to disc brakes using spacer elements as described above, but also to the spacer elements as such.

Further objects and advantages of the present invention will be obvious for a person skilled in the art when reading the detailed description below of preferred embodiments.

### Brief Description of the Drawings

The invention will be explained further below by way of examples and with reference to the enclosed drawings. In the drawings:
Fig. 1 is a perspective view of one general example of a brake disc slideably mounted on a hub with spacer elements in a first embodiment according to the present invention;
Fig. 2 is a plan view of the brake disc and the hub of Fig. 1;
Fig. 3a is an enlarged section of Fig. 2;
Fig. 3b is another enlarged section of Fig. 2;
Fig. 3c is a cross section along line C-C of Fig. 3a;
Fig. 4a is a perspective view of a spacer element in a second embodiment according to the present invention;
Fig. 4b is a sectional plan view showing the spacer element of Fig. 4a in its mounted position;
Fig. 5 is a plan view of a brake disc and a hub with spacer elements in a third embodiment according to the present invention; and
Fig. 6 is an enlarged section of Fig. 5.

### Detailed Description of Preferred Embodiments

As used in this description the expressions "axial", "radial", "rotational" and similar expressions are in relation to a wheel axle (not shown) associated with the brake and to the brake discs, hub or sleeve etc. received directly or by means of intermediate parts on the wheel axle.

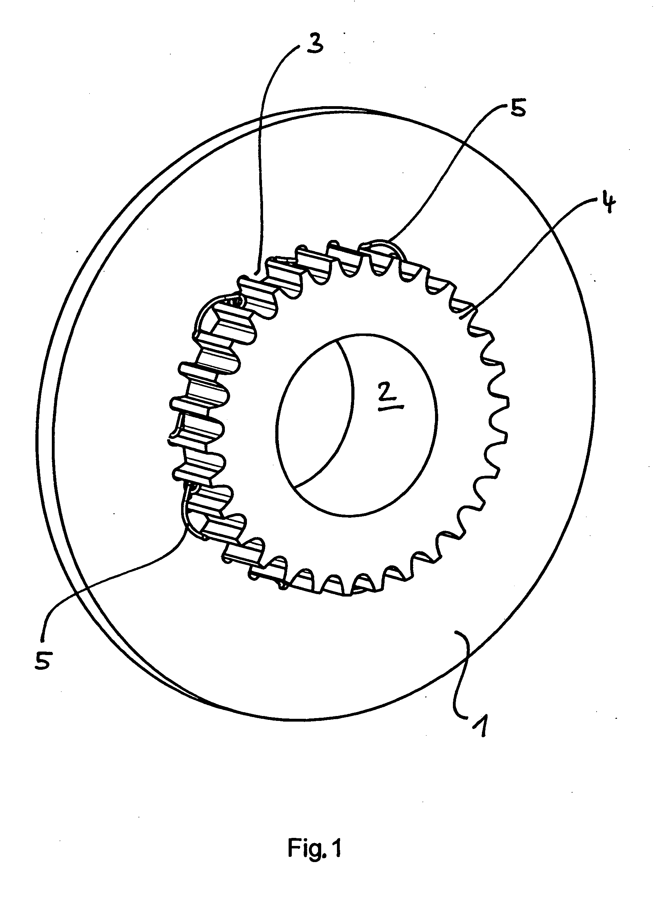

In Fig. 1, schematically, a brake disc 1 and a hub 2 are shown, whereby the brake disc 1 is slideably guided on the hub 2. This arrangement can be used in any type of disc brake assembly, in which at least one brake disc is slideably guided.

The brake disc 1 is comprising radially inward directed teeth or splines 3 which are intermeshing with radially outward directed teeth or splines 4 arranged on the hub 2. The splined engagement allow rotational force or torque transmission upon engagement of the brake disc 1 with brake pads (not shown) and at the same time axial sliding of the brake disc 1 on the hub 2.

Between the splines 3 of the brake disc 1 and the splines 4 of the hub 2, spacer elements 5 are equidistantly arranged at the circumference of the intermeshing zone of the brake disc 1 and the hub 2.

The spacer elements 5 are made of one single spring wire and comprise a middle section 5.1 which is formed like a helical spring. The spring wire of said helical spring 5.1 is extending at both ends of it radially and tangentially in such way that extensions 5.2 and 5.3 are directed in opposite directions, whereby one extension 5.2 is abutting against one side of the brake disc 1 and the other extension 5.3 is abutting against the other side of said brake disc 1.

At their ends, each extension 5.2 and 5.3 ends into a hook 5.4 which is directed from the helical spring 5.1 away and which passes the gap between the splines 3 of the brake disc 1 and the splines 4 of the hub 4, respectively.

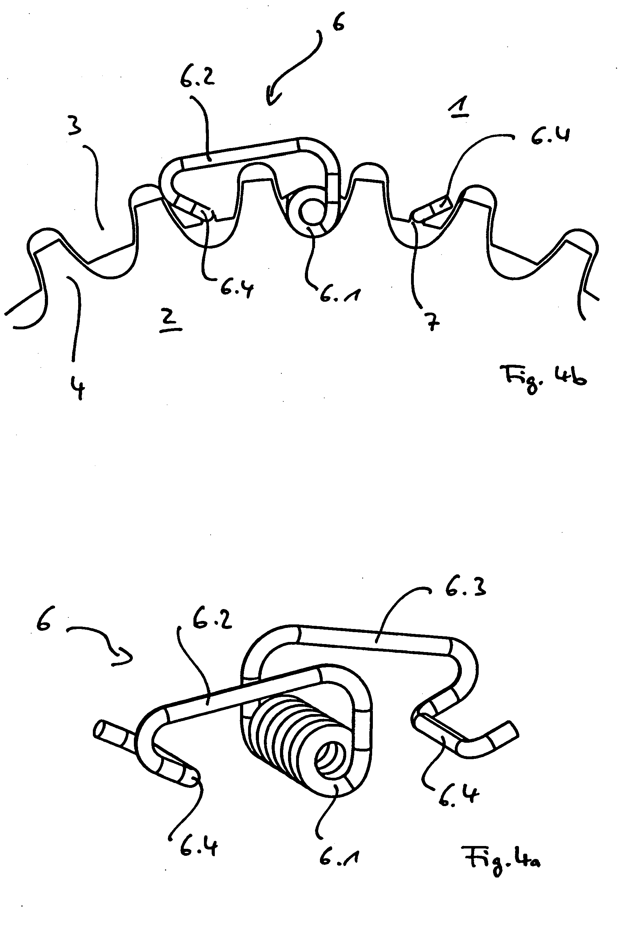

In Figs. 4a and 4b a second embodiment of the spacer elements is shown, which is similar to the one as shown in Figs. 1 - 3c.

The embodiment of the spacer elements 6 shown therein comprises also a helical spring portion 6.1, extensions 6.2 and 6.3 in each tangential direction which end into hooks 6.4, respectively. The hooks 6.4 are received in grooves 7, which are arranged in the top of the splines 3 of the brake disc 1, respectively.

In all embodiments of the invention, the helical spring portion 5.1 or 6.1 comprises a stiffness which takes radial impacts from the brake disc 1 resulting from driving on uneven roads with the brake in released position.

By that flanks 8 of the splines 3 of the brake disc 1 are barred from contacting flanks 9 of the splines 4 of the hub 2. However, as can be seen from the Figs. in general, the spacer elements 5, 6 do not prevent any rotational engagement of these flanks 8 and 9 while braking is effected.

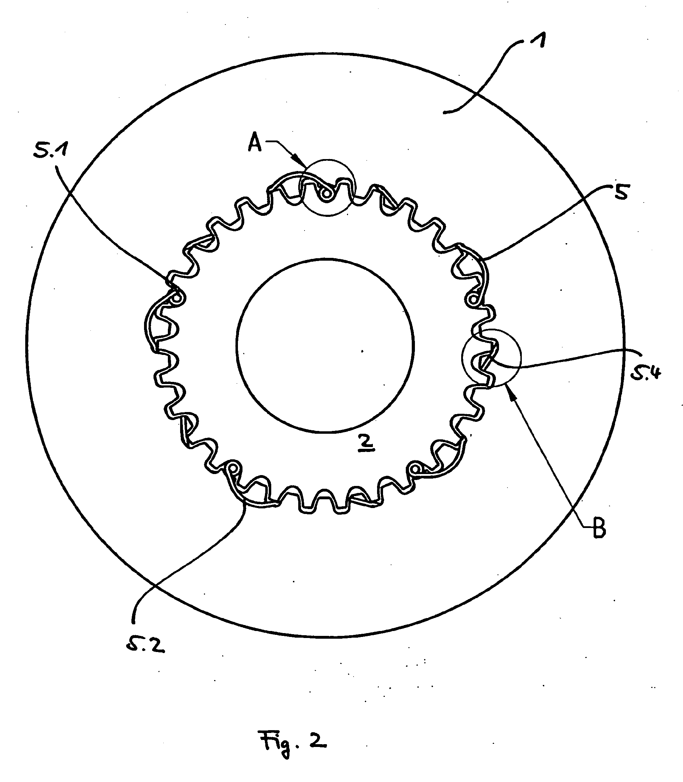

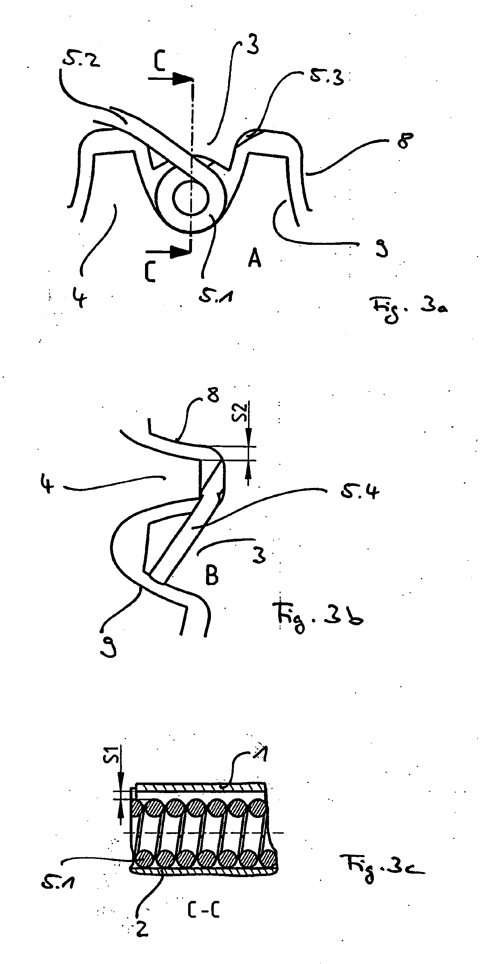

Figs. 3a - 3c do show enlarged sections of Fig. 2.

According to the invention, the spacer elements 5 and 6 are configured in such a way that a clearance S1 between the helical spring portions 5.1 and 6.1 and the top of the splines 3 of the brake disc 1 is always smaller than a clearance S2 between the flanks 8 of the splines 3 of the brake disc 1 and the flanks 9 of the splines 4 of the hub 2.

Since several spacer elements 5 or 6 are arranged at the circumference of the intermeshing or engagement zone of the brake disc 1 and the hub 2, the clearances S2 between all of the flanks 8 and 9 of the splines 3 and 4, respectively, are substantially kept equal.

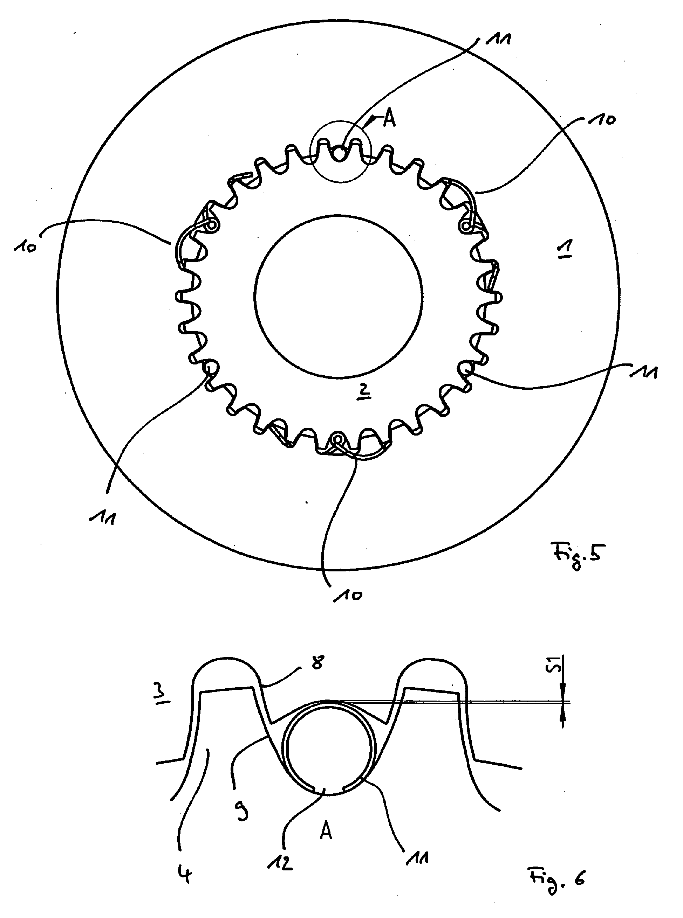

Fig. 5 shows another arrangement in a plan view of a brake disc 1 and a hub 2 and Fig. 6 is an enlarged section of Fig. 5.

Between the brake disc 1 and the hub 2 disc stabilizing elements 10 are arranged, which, inter alia, provide retraction forces for the axial retraction of the brake disc 1 on the hub 2 when no braking force is applied. In addition, spacer elements 11 are arranged between the splines 3 of the brake disc 1 and the splines 4 of the hub 2 at equal distances, namely between two disc stabilizing elements 10, respectively.

Whereas the impact dampening and additional functions, such as disc stabilization and axial retraction, are incorporated in one spacer element 5 or 6 according to the embodiments of Figs. 1 - 4b, the spacer elements 11 according to Fig. 5 only provide the radial impact dampening and therefore are inserted between the brake disc 1 and the hub 2 as additional elements.

As can be seen in Fig. 6, the spacer element 11 consists of an axially extending cylindrical tube with a corresponding stiffness or resilience. The resilience is achieved by means of a slit 12 axially extending in the tube.

The clearance S2 in this embodiment is maintained by the disc stabilizing elements 10, whereas the clearance S1 is defined by the selected dimension of the cylindrical tube 11.

The spacer elements 11 may be designed to axially slide with the brake disc 1 according to the wear of the brake pads; alternatively, they may be designed to be axially fixed relative to the hub 2, whereby the disc stabilizing elements 10 are axially slideable with the brake disc 1.

A person skilled in the art realises that the exact form of the spacer elements may vary as long as they perform the desired functions, in particular the impact dampening, in the same or similar way as described above.

### List of reference numerals:

- 1: Brake disc
- 2: Hub
- 3: Splines of brake disc
- 4: Splines of hub
- 5,6: Spacer elements
- 5.1, 6.1: Helical spring portions
- 5.2, 6.2: Extensions
- 5.3, 6.3: Extensions
- 5.4, 6.4: Hooks
- 7: Grooves
- 8: Flanks of splines of brake disc
- 9: Flanks of splines of hub
- 10: Disc stabilizing elements
- **11**: **Spacer elements**
- 12: Slit

- S1: Clearance between spacer element and brake disc
- S2: Clearance between flanks

## Claims

1. Disc brake having a caliper encircling one or more brake discs (1), of which at least one brake disc (1) is received slideably on a hub (2) or a part connected to the hub (2) by means of intermeshing splines (3,4) of both the brake disc (1) and the hub (2) or the part connected to the hub (2), wherein spacer elements (5,6,11) are placed between the brake disc (1) and the hub (2) or the part connected to the hub (2) **characterized in that** the spacer elements (5,6,11) are arranged and configured so that contact between the flanks (8) of the splines (3) of the brake disc (1) and the flanks (9) of the splines (4) of the hub (2) or the part connected to the hub (2) is prevented for any radial movement of the brake disc (1) relative to the hub (2) or the part connected to the hub (2) only, but still allowing such contact during rotational engagement of the brake disc (1) and the hub (2) or the part connected to the hub (2) for torque transmission during braking.

2. Disc brake according to claim 1, in which at least a portion (5.1,6.1) of the spacer element (5,6) comprises such a stiffness so as to dampen radial impacts from the brake disc (1).

3. Disc brake according to claim 1 or 2, in which the spacer elements (5,6,11) are configured so as to circumferentially provide equal clearances between the splines (3) of the brake disc (1) and the splines (4) of the hub (2) or the part connected to the hub (2) thereby rotationally centering the brake disc (1) relative to the hub (2) or the part connected to the hub (2).

4. Disc brake according to claim 1, 2 or 3, in which the spacer elements (5,6,11) are arranged and configured so that the spacer elements (5,6,11) or the dampening portions (5.1,6.1) of the spacer elements (5,6) are not simultaneously contacting the brake disc (1) and the hub (2) or the part connected to the hub (2).

5. Disc brake according to claim 4, in which the spacer elements (5,6,11) are arranged and configured so as to provide a clearance (S2) between the flanks (8) of the splines (3) of the brake disc (1) and the flanks (9) of the splines (4) of the hub (2) or the part connected to the hub (2) which is greater than the clearance (S1) between the spacer elements (5,6,11) or the dampening portions (5.1,6.1) of the spacer elements (5,6) and the brake disc (1) or the hub (2) or the part connected to the hub (2).

6. Disc brake according to claim 5, in which the clearance (S2) between the flanks (8) of the splines (3) of the brake disc (1) and the flanks (9) of the splines (4) of the hub (2) or the part connected to the hub (2) is greater than the clearance (S1) between the spacer elements (5,6,11) or the dampening portions (5.1,6.1) of the spacer elements (5,6) and the brake disc (1) or the hub (2) or the part connected to the hub (2) by 50%, preferably by 70% and most preferably by 100%.

7. Disc brake according to one of claims 1 to 6, in which the spacer elements (5,6,11) are configured as helical springs or resilient cylindrical tubes.

8. Disc brake according to claim 7, in which the spacer elements are (5,6,11) extending at least over the thickness of the brake disc (1).

9. Disc brake according to one of the preceding claims, in which the spacer elements (5,6,10) are arranged and configured such as to create forces assisting the axial retraction of the brake disc (1) at release of the brake.

10. Disc brake according to one of the preceding claims, in which the spacer elements (5,6,10) are arranged and configured such as to axially slide with the brake disc (1) on the hub (2) or the part connected to the hub (2).

11. Spacer element adapted to be placed between a brake disc (1) and a hub (2) or a part connected to the hub (2), whereas the brake disc (1) is slideable on the hub (2) or the part connected to the hub (2) via splines (3,4), respectively, **characterized in that** at least one portion (5.1,6.1) of the spacer element (5,6) comprises such a dimension and such a stiffness relative to the splines (3,4) of both the brake disc (1) and the hub (2) or the part connected to the hub (2) that during any radial movements of the brake disc (1) relative to the hub (2) or the part connected to the hub (2) all radial forces from the brake disc (1) are transmittable to the hub (2) or the part connected to the hub (2) exclusively via the at least one portion (5.1,6.1) of the spacer element (5,6), whereas said dimension is chosen so that contact between flanks (8) of the splines (3) of the brake disc (1) and flanks (9) of the splines (4) of the hub (2) or the part connected to the hub (2) during rotational engagement of the brake disc (1) and the hub (2) or the part connected to the hub (2) for torque transmission during braking is still allowable.

12. Spacer element according to claim 11, in which the portion (5.1,6.1) of the spacer element (5,6) or the spacer element (5,6,11) comprises a rotationally symmetric shape.

13. Spacer element according to claim 12, in which the portion (5.1,6.1) of the spacer element (5,6) or the spacer element (5,6,11) is made as a helical spring or resilient cylindrical tube.

## Patentansprüche

1. Scheibenbremse mit einem Bremssattel, der eine oder mehrere Bremsscheiben (1) übergreift, wovon zumindest eine Bremsscheibe (1) gleitend auf einer Nabe (2) oder einem mit der Nabe (2) verbundenen Teil mittels ineinander greifender Keilverzahnungen (3, 4) sowohl der Bremsscheibe (1) als auch der Nabe (2) oder des mit der Nabe (2) verbundenen Teils aufgenommen ist, wobei Abstandselemente (5, 6, 11) zwischen der Bremsscheibe (1) und der Nabe (2) oder dem mit der Nabe (2) verbundenen Teil angeordnet sind, **dadurch gekennzeichnet, dass** die Abstandselemente (5, 6, 11) derart angeordnet und ausgestaltet sind, dass ausschließlich für jede Radialbewegung der Bremsscheibe (1) relativ zu der Nabe (2) oder zu dem mit der Nabe (2) verbundenen Teil ein Kontakt zwischen den Flanken (8) der Keilverzahnungen (3) der Bremsscheibe (1) und den Flanken (9) der Keilverzahnungen (4) der Nabe (2) oder dem mit der Nabe (2) verbundenen Teil verhindert wird, jedoch stets ein solcher Kontakt während des Dreheingriffs der Bremsscheibe (1) mit der Nabe (2) oder mit dem mit der Nabe (2) verbundenen Teil für eine Drehmomentübertragung während des Bremsvorgangs sichergestellt ist.

2. Scheibenbremse nach Anspruch 1, bei welcher zumindest ein Abschnitt (5,1, 6,1) des Abstandselements (5, 6) eine solche Steifigkeit aufweist, dass radiale Stöße von der Bremsscheibe (1) gedämpft werden.

3. Scheibenbremse nach Anspruch 1 oder 2, bei welcher die Abstandselemente (5, 6, 11) derart ausgestaltet sind, dass diese umfänglich gleiche Abstände zwischen den Keilverzahnungen (3) der Bremsscheibe (1) und den Keilverzahnungen (4) der Nabe (2) oder des mit der Nabe (2) verbundenen Teils zur Verfügung stellen und **dadurch** die Bremsscheibe (1) relativ zu der Nabe (2) oder dem mit der Nabe (2) verbundenen Teil rotatorisch zentrieren.

4. Scheibenbremse nach Anspruch 1, 2 oder 3, bei welcher die Abstandselemente (5, 6, 11) so angeordnet und ausgestaltet sind, dass die Abstandselemente (5, 6, 11) oder die Dämpfungsabschnitte (5,1, 6,1) der Abstandselemente (5, 6) nicht gleichzeitig mit der Bremsscheibe (1) und der Nabe (2) oder dem mit der Nabe (2) verbundenen Teil in Kontakt stehen.

5. Scheibenbremse nach Anspruch 4, bei welcher die Abstandselemente (5, 6, 11) so angeordnet und ausgestaltet sind, dass sie einen Abstand (S2) zwischen den Flanken (8) der Keilverzahnungen (3) der Bremsscheibe (1) und den Flanken (9) der Keilverzahnungen (4) der Nabe (2) oder des mit der Nabe (2) verbundenen Teils zur Verfügung stellen, welcher größer ist als der Abstand (S1) zwischen den Abstandselementen (5, 6, 11) oder den Dämpfungsabschnitten (5,1, 6,1) der Abstandselemente (5, 6) und der Bremsscheibe (1) oder der Nabe (2) oder dem mit der Nabe (2) verbundenen Teil.

6. Scheibenbremse nach Anspruch 5, bei welcher der Abstand (S2) zwischen den Flanken (8) der Keilverzahnungen (3) der Bremsscheibe (1) und den Flanken (9) der Keilverzahnungen (4) der Nabe (2) oder des mit der Nabe (2) verbundenen Teils um 50 %, vorzugsweise um 70 % und insbesondere vorzugsweise um 100 % größer als der Abstand (S1) zwischen den Abstandselementen (5, 6, 11) oder der Dämpfungsabschnitten (5,1, 6,1) der Abstandselemente (5, 6) und der Bremsscheibe (1) oder der Nabe (2) oder dem mit dem Nabe (2) verbundenen Teil ist.

7. Scheibenbremse nach einem der Ansprüche 1 bis 6, bei welcher die Abstandselemente (5, 6, 11) als Schraubenfedern oder elastische zylindrische Röhren ausgestaltet sind.

8. Scheibenbremse nach Anspruch 7, bei welcher die Abstandselemente (5, 6, 11) sich zumindest über die Breite der Bremsscheibe (1) erstrecken.

9. Scheibenbremse nach einem der vorhergehenden Ansprüche, bei welcher die Abstandselemente (5, 6, 10) so angeordnet und ausgestaltet sind, dass Kräfte erzeugt werden, die die axiale Rückstellung der Bremsscheibe (1) beim Lösen der Bremse unterstützen.

10. Scheibenbremse nach einem der vorhergehenden Ansprüche, bei welcher die Abstandselemente (5, 6, 10) so angeordnet und ausgestaltet sind, dass diese mit der Bremsscheibe (1) auf der Nabe (2) oder dem mit der Nabe (2) verbundenen Teil axial gleiten.

11. Abstandselement, das in der Lage ist, zwischen einer Bremsscheibe (1) und einer Nabe (2) oder einem mit der Nabe (2) verbundenen Teil angeordnet zu werden, wobei die Bremsscheibe (1) auf der Nabe (2) oder dem mit der Nabe (2) verbundenen Teil jeweils über Keilverzahnungen (3, 4) gleitfähig ist, **dadurch gekennzeichnet, dass** zumindest ein Abschnitt (5,1, 6,1) des Abstandselements (5, 6) eine solche Dimension und eine solche Steifigkeit gegenüber den Keilverzahnungen (3, 4) sowohl der Bremsscheibe als auch der Nabe (2) oder des mit der Nabe (2) verbundenen Teils aufweist, dass während jeder Radialbewegung der Bremsscheibe (1) relativ zu der Nabe (2) oder zu dem mit der Nabe (2) verbundenen Teil sämtliche Radialkräfte von der Bremsscheibe (1) auf die Nabe (2) oder das mit der Nabe (2) verbundene Teil ausschließlich über den zumindest einen Abschnitt (5,1, 6,1) des Abstandselements (5, 6) übertragbar sind, wobei die Dimension so gewählt ist, dass ein Kontakt zwischen Flanken (8) der Keilverzahnungen der Bremsscheibe (1) und Flanken (9) der Keilverzahnungen (4) der Nabe (2) oder des mit der Nabe (2) verbundenen Teils während des Dreheingriffs der Bremsscheibe (1) und der Nabe (2) oder dem mit der Nabe (2) verbundenen Teil für eine Drehmomentübertragung während des Bremsvorgangs noch sichergestellt ist.

12. Abstandselement nach Anspruch 11, bei welchem der Abschnitt (5,1, 6,1) des Abstandselements (5, 6) oder des Abstandselements (5, 6, 11) eine rotationssymmetrische Gestalt aufweist.

13. Abstandselement nach Anspruch 12, bei welchem der Abschnitt (5,1, 6,1) des Abstandselements (5, 6) oder des Abstandselements (5, 6, 11) als eine Schraubenfeder oder als eine elastische zylindrische Röhre ausgebildet ist.

## Revendications

1. Frein à disque possédant un étrier encerclant un ou plusieurs freins à disque (1), dont au moins un frein à disque (1) est reçu de manière coulissante sur un moyeu (2) ou une partie reliée au moyeu (2) au moyen de cannelures entrecroisées (3, 4) du frein à disque (1) et du moyeu (2) ou la partie reliée au moyeu (2), dans lequel des éléments d'entretoise (5, 6, 11) sont placés entre le frein à disque (1) et le moyeu (2) ou la partie reliée au moyeu (2), **caractérisé en ce que** les éléments d'entretoise (5, 6, 11) sont disposés et configurés de sorte que le contact entre les flancs (8) des cannelures (3) du frein à disque (1) et les flancs (9) des cannelures (4) du moyeu (2) ou la partie reliée au moyeu (2) soit empêché pour tout mouvement radial du frein à disque (1) par rapport au moyeu (2) ou la partie reliée au moyeu (2) uniquement, mais que cependant ledit contact est autorisé pendant la mise en prise rotative du frein à disque (1) et du moyeu (2) ou la partie reliée au moyeu (2) pour une transmission de couple pendant le freinage.

2. Frein à disque selon la revendication 1, dans lequel au moins une partie (5.1, 6.1) de l'élément d'entretoise (5, 6) comprend une rigidité de manière à amortir les impacts radiaux provenant du frein à disque (1).

3. Frein à disque selon la revendication 1 ou 2, dans lequel les éléments d'entretoise (5, 6, 11) sont configurés de manière à fournir radialement des espaces morts égaux entre les cannelures (3) du frein à disque (1) et les cannelures (4) du moyeu (2) ou la partie reliée au moyeu (2) centrant ainsi le frein à disque (1) de manière rotative par rapport au moyeu (2) ou la partie reliée au moyeu (2).

4. Frein à disque selon la revendication 1, 2 ou 3, dans lequel les éléments d'entretoise (5, 6, 11) sont disposés et configurés de sorte que les éléments d'entretoise (5, 6, 11) ou les parties d'amortissement (5.1, 6.1) des éléments d'entretoise (5, 6) ne soient pas simultanément en contact avec le frein à disque (1) et le moyeu (2) ou la partie reliée au moyeu (2).

5. Frein à disque selon la revendication 4, dans lequel les éléments d'entretoise (5, 6, 11) sont disposés et configurés de manière à fournir un espace mort (S2) entre les flancs (8) des cannelures (3) du frein à disque (1) et les flancs (9) des cannelures (4) du moyeu (2) ou la partie reliée au moyeu (2) qui soit supérieur à l'espace mort (S1) entre les éléments d'entretoise (5, 6, 11) ou les parties d'amortissement (5.1, 6.1) des éléments d'entretoise (5, 6) et le frein à disque (1) ou le moyeu (2) ou la partie reliée au moyeu (2).

6. Frein à disque selon la revendication 5, dans lequel l'espace mort (S2) entre les flancs (8) des cannelures (3) du frein à disque (1) et les flancs (9) des cannelures (4) du moyeu (2) ou la partie reliée au moyeu (2) est supérieur à l'espace mort (S1) entre les éléments d'entretoise (5, 6, 11) ou les parties d'amortissement (5.1, 6.1) des éléments d'entretoise (5, 6) et le frein à disque (1) ou le moyeu (2) ou la partie reliée au moyeu (2) de 50 %, de préférence de 70 % et de manière préférée entre toutes de 100 %.

7. Frein à disque selon l'une des revendications 1 à 6, dans lequel les éléments d'entretoise (5, 6, 11) sont configurés en tant que ressorts hélicoïdaux ou tubes cylindriques élastiques.

8. Frein à disque selon la revendication 7, dans lequel les éléments d'entretoise (5, 6, 11) s'étendent au moins sur l'épaisseur du frein à disque (1).

9. Frein à disque selon l'une quelconque des revendications précédentes, dans lequel les éléments d'entretoise (5, 6, 10) sont disposés et configurés de manière à créer des forces favorisant la rétraction axiale du frein à disque (1) au desserrage du frein.

10. Frein à disque selon l'une quelconque des revendications précédentes, dans lequel les éléments d'entretoise (5, 6, 10) sont disposés et configurés de manière à coulisser axialement avec le frein à disque (1) sur le moyeu (2) ou la partie reliée au moyeu (2).

11. Elément d'entretoise adapté pour être placé entre un frein à disque (1) et un moyeu (2) ou une partie reliée au moyeu (2), dans lequel le frein à disque (1) peut coulisser sur le moyeu (2) ou la partie reliée au moyeu (2) par l'intermédiaire de cannelures (3, 4) respectivement, **caractérisé en ce qu'**au moins une partie (5.1, 6.1) de l'élément d'entretoise (5, 6) comprend une dimension telle et une rigidité telle par rapport aux cannelures (3, 4) du frein à disque (1) et du moyeu (2) ou la partie reliée au moyeu (2) que pendant tout mouvement radial du frein à disque (1) par rapport au moyeu (2) ou la partie reliée au moyeu (2), toutes les forces radiales provenant du frein à disque (1) sont transmissibles au moyeu (2) ou la partie reliée au moyeu (2) exclusivement par l'intermédiaire de la au moins une partie (5.1, 6.1) de l'élément d'entretoise (5,6), dans lequel ladite dimension est choisie afin que le contact entre les flancs (8) des cannelures (3) du frein à disque (1) et les flancs (9) des cannelures (4) du moyeu (2) ou la partie reliée au moyeu (2) pendant la mise en prise rotative du frein à disque (1) et du moyeu (2) ou la partie reliée au moyeu (2) pour une transmission de couple pendant le freinage soit toujours possible.

12. Elément d'entretoise selon la revendication 11, dans lequel la partie (5.1, 6.1) de l'élément d'entretoise (5, 6) ou l'élément d'entretoise (5, 6, 11) comprend une forme symétrique par rotation.

13. Elément d'entretoise selon la revendication 12, dans lequel la partie (5.1, 6.1) de l'élément d'entretoise (5, 6) ou l'élément d'entretoise (5, 6, 11) est réalisée comme un ressort hélicoïdal ou un tube cylindrique élastique.
